# EUROPÄISCHE PATENTSCHRIFT

(11) **EP 1 882 010 B1**
(45) Veröffentlichungstag und Bekanntmachung des Hinweises auf die Patenterteilung: **14.01.2009**
(21) Anmeldenummer: 06724802.1
(22) Anmeldetag: 11.05.2006
(51) Int. Cl.: C08K 9/06

(54) **VERFAHREN ZUR HERSTELLUNG HOCHDISPERSE FÜLLSTOFFE ENTHALTENDER SILICONMASSEN**
METHOD FOR PRODUCING SILICONE MATERIALS CONTAINING HIGHLY DISPERSED FILLING MATERIALS
PROCEDE POUR PRODUIRE DES MASSES DE SILICONE CONTENANT DES MATIERES DE CHARGE FORTEMENT DISPERSEES

(30) Priorität: 20.05.2005 DE 102005023403
(43) Veröffentlichungstag der Anmeldung: 30.01.2008
(73) Patentinhaber: Wacker Chemie AG, 81737 München (DE)
(72) Erfinder: WÖRNER, Christof, 84489 Burghausen (DE); ACHENBACH, Frank, 84359 Simbach Am Inn (DE)
(74) Vertreter: Deffner-Lehner, Maria
(86) Internationale Anmeldenummer: PCT/EP2006/004451
(87) Internationale Veröffentlichungsnummer: WO 2006/122706

(56) Entgegenhaltungen:
- DE-A1- 3 839 900
- US-A- 3 122 520
- US-A- 3 649 588
- US-A- 4 780 108

## Beschreibung

Gegenstand der Erfindung ist ein Verfahren zur Herstellung von Mischungen, bestehend aus einem feinteiligen, oberflächenbehandelten Füllstoff, Siliconen und gegebenenfalls weiteren Zusätzen, die zur Herstellung vernetzungsfähiger Siliconkautschukmassen verwendet werden, welches den Vorteil hat, dass die aus der erfindungsgemäß hergestellten Füllstoff-Silicon-Mischung hergestellten vernetzungsfähigen Siliconkautschukmassen hervorragende Viskositätsstabilität und verbesserte Verarbeitbarkeit aufweisen und zu Siliconelastomeren mit verbessertem Eigenschaftsprofil führen.

Die Herstellung vernetzungsfähiger Siliconkautschukmassen, die unter den Bezeichnungen HTV, LSR und RTV hinlänglich bekannt sind, beinhaltet als notwendigen Verfahrensschritt das Vermischen von Polyorganosiloxanen (Siliconen) mit Füllstoffen, insbesondere feinteiligen, verstärkend wirkenden Füllstoffen mit einer spezifischen Oberfläche von mindestens 50 m²/g, um den daraus hergestellten Siliconelastomeren ausreichende mechanische Festigkeit und Elastizität zu verleihen. Bevorzugte verstärkende Füllstoffe sind pyrogene oder gefällte Kieselsäuren und Ruße. Üblicherweise erfolgt zunächst das Vermischen von Polyorganosiloxanen und Füllstoffen zu einer Basismischung, die nachfolgend durch Zumischen weiterer Bestandteile, wie Vernetzern, Katalysatoren, Stabilisatoren, Weichmachern, Pigmenten etc., zur vernetzungsfähigen Siliconkautschukmasse komplettiert wird. Für die Herstellung dieser Basismischungen, d.h. zur Dispergierung feinteiliger Füllstoffe in Siliconen, sind zahlreiche Verfahren bekannt. Im Wesentlichen lassen sich zwei Verfahrensvarianten unterscheiden, die je nach dem hydrophoben bzw. hydrophilen Charakter des zu dispergierenden Füllstoffs zur Anwendung kommen. Die besonders bevorzugt eingesetzten feinteiligen Kieselsäuren fallen herstellungsbedingt zunächst als hydrophile Teilchen an, was deren unmittelbare Verwendung zur Herstellung vernetzungsfähiger Siliconmassen sehr einschränkt, weil die durch den hydrophilen Charakter der Kieselsäure bedingten intensiven Wechselwirkungen mit den Polyorganosiloxanen zu einem drastischen Viskositätsanstieg (Verstrammung bis hin zur Brüchigkeit) führen, wodurch die weitere Verarbeitung der vernetzungsfähigen Siliconmasse erschwert oder gänzlich unterbunden wird. Um viskositätsstabile, insbesondere fließfähige Siliconmassen zu erhalten, ist es aus diesem Grund unumgänglich, die Kieselsäure zu hydrophobieren.

Die Hydrophobierung der Kieselsäure kann hierbei in einem separaten Verfahrensschritt, wie in der deutschen Offenlegungsschrift DE 38 39 900 A1 beschrieben, erfolgen. Die hydrophobe Kieselsäure kann dann nachfolgend in kontinuierlich oder diskontinuierlich arbeitenden Mischaggregaten im Polyorganosiloxan dispergiert werden. Eine weitere Verfahrensvariante zur Herstellung von Basismischungen wird in der deutschen Offenlegungsschrift DE 25 35 334 A1 beschrieben. Diese zeichnet sich dadurch aus, dass das Einmischen der hydrophilen Kieselsäure in das Polyorganosiloxan in Gegenwart von Wasser und einem Hydrophobierungsmittel, wie beispielsweise Hexamethyldisilazan erfolgt (in-situ Verfahren). Beiden Verfahrensvarianten ist gemein, dass letztlich eine hydrophobe Kieselsäure in der Basismischung vorliegt, wodurch das rheologische Verhalten, insbesondere die Fließfähigkeit und Viskositätsstabilität, der Basismischung sowie das der daraus hergestellten vernetzungsfähigen Siliconkautschukmassen erheblich verbessert wird.

Das in-situ Verfahren zur Herstellung von Basismischungen hat u.a. den Nachteil, dass die hydrophile Kieselsäure dem aus Polyorganosiloxan und Hydrophobierungsmittel bestehendem Gemisch nur portionsweise zugemischt werden kann, da andernfalls ein Zerfallen der kompakten Masse in ein pulverförmiges Gemisch erfolgt, welches nicht mehr weiterverarbeitet werden kann. Zudem müssen Rückstände und Nebenprodukte des Hydrophobierungsmittels sowie zugesetztes Wasser nach der Hydrophobierungsphase entfernt werden, was letztlich ein zeitintensives Einmischen, Kneten und Ausheizen, typischerweise über mehrere Stunden hinweg, erforderlich macht. Das in-situ Verfahren kommt daher vor allem in diskontinuierlich arbeitenden Mischaggregaten zur Anwendung (Batch-Verfahren), wo hinreichend lange Verweilzeiten gegeben sind. Beispielsweise wird in der deutschen Offenlegungssschrift DE 42 15 205 A1 ein kontinuierlich arbeitendes in-situ Verfahren zur Herstellung von Siliconkautschukmassen beschrieben, welches sich dadurch auszeichnet, dass die Herstellung der Basismischung durch Hintereinanderschalten von drei Mischaggregaten bei einer Gesamtverweilzeit der Basismischung von ca. eine Stunde ermöglicht wird, was jedoch hohe apparative und prozesstechnische Anforderungen stellt.

Das Dispergieren einer vorhydrophobierten Kieselsäure in Polyorganosiloxanen weist die o.g. Nachteile des in-situ Verfahrens nicht auf und hat zudem den Vorteil, dass es sowohl in diskontinuierlich als auch in kontinuierlich arbeitenden Mischaggregaten erfolgen kann, obgleich in letzteren nur kurze Verweilzeiten zur Verfügung stehen. Kontinuierliche Verfahren stellen im Vergleich zu den diskontinuierlichen einen gewichtigen technologischen Fortschritt dar, da wesentlich höhere Raum-Zeit-Ausbeuten und geringere Schwankungen in der Produktqualität erreicht werden können. Ein solches Verfahren zur kontinuierlichen Herstellung von Basismischungen unter Verwendung vorhydrophobierter Kieselsäure wird in der deutschen Offenlegungsschrift DE 196 17 606 A1 beschrieben. Das Dispergieren der vorhydrophobierten Kieselsäure erfolgt beispielhaft während einer Verweilzeit von nur 15 Minuten.

Das in sehr kurzer Zeit erfolgende Dispergieren einer vorhydrophobierten Kieselsäure im Polyorganosiloxan hat allerdings auch nachteilige Auswirkungen. Zum einen befinden sich die Bestandteile der Mischung nicht völlig im Gleichgewicht, was sich in Veränderungen der Viskosität während der sich anschließenden Lagerung der Basismischung bzw. der daraus hergestellten Siliconkautschukmasse zu erkennen gibt. Dabei ist im Allgemeinen trotz Verwendung einer vorhydrophobierten Kieselsäure eine stetige Viskositätszunahme während der Lagerung zu verzeichnen. Dieses als Verstrammung (crepe hardening) bekannte Phänomen wird mit der Ausbildung von Polymerbrücken zwischen den Füllstoffteilchen in Zusammenhang gebracht. Da mit zunehmendem Hydrophobierungsgrad der Kieselsäure die Wechselwirkung zwischen Füllstoff und Polyorganosiloxan vermindert wird, kann durch Erhöhung des Hydrophobierungsgrades der vorhydrophobierten Kieselsäure in gewissem Umfang eine Verbesserung der Fließfähigkeit und Viskositätsstabilität erzielt werden. Andererseits nimmt aber die verstärkende Wirkung der Kieselsäure mit zunehmendem Hydrophobierungsgrad ab, was sich vor allem bei sehr hohen Hydrophobierungsgraden nachteilig auf die mechanische Festigkeit und das mechano-elastische Eigenschaftsbild der resultierenden Siliconelastomere auswirkt.

Aus dem Stand der Technik sind eine Reihe von Additiven bekannt, welche die Fließfähigkeit und Viskositätsstabilität von vernetzungsfähigen Siliconkautschukmassen verbessern. Die deutsche Offenlegungsschrift DE 195 45 365 A1 beschreibt beispielsweise ein Verfahren zur Herstellung lagerstabiler Siliconkautschukmassen, welches durch den Zusatz von Silanolen oder Alkanolen gekennzeichnet ist. Derartige Zusätze sind jedoch in vielerlei Hinsicht von Nachteil, da sie den Anteil flüchtiger bzw. extrahierbarer Bestandteile erhöhen, die Topfzeit und die Vernetzungsgeschwindigkeit beeinflussen sowie zur geruchlichen Belastung bei der Verarbeitung der Siliconkautschukmasse führen.

Der vorliegenden Erfindung liegt daher zum einen die Aufgabe zugrunde, ein Verfahren zur Dispergierung oberflächenbehandelter hochdisperser Füllstoffe in Polyorganosiloxanen zu entwickeln, welches ohne Zusatz reaktiver, in der Siliconmasse verbleibender Additive zu fließfähigen, viskositätsstabilen Basismischungen und insbesondere vernetzungsfähigen Siliconkautschukmassen führt.

Das in sehr kurzer Zeit erfolgende Dispergieren einer vorhydrophobierten hochdispersen Kieselsäure im Polyorganosiloxan hat einen weiteren Nachteil. Hochdisperse Füllstoffe weisen im Allgemeinen sehr niedrige Schüttdichten auf, d.h., die Materialdichte liegt um ein bis zwei Größenordnungen niedriger als die Dichte des im Material enthaltenen Feststoffes. Die aus diesem Grund im Material enthaltene Gasmenge (Luft) wird größtenteils während des Einmischens des hochdispersen Füllstoffs in das Polyorganosiloxan nach außen verdrängt. Verstärkende, strukturierte Füllstoffe, wie hochdisperse Kieselsäuren, weisen jedoch eine fraktale Struktur auf, so dass nicht vermieden werden kann, dass eine gewisse Gasmenge an der Oberfläche und im Innern der Füllstoffpartikel verbleibt. Während des Mischens sowie der sich anschließenden Lagerung wird diese partikelgebundene Luft zunehmend vom Polyorganosiloxan verdrängt, indem dieses die Füllstoffoberfläche benetzt und dabei zunehmend in die fraktale, poröse Struktur der Füllstoffpartikel eindringt (Infiltration). Diesem über Stunden bis Tage ablaufendem Prozess sind jedoch Grenzen gesetzt. Bedingt durch die Kettenlänge des eingesetzten Polyorganosiloxans, die einen bestimmten hydrodynamischen Radius bedingt, sowie die fraktale Struktur des hochdispersen Füllstoffs kann die Benetzung des Füllstoffs niemals vollständig erfolgen; stets verbleiben auf der Oberfläche oder im Innern der Füllstoffpartikel winzige Gaseinschlüsse (Lufttaschen), deren Abmessungen im Submikrometerbereich liegen. Das Vorhandensein dieser Lufttaschen kann unter bestimmten Verarbeitungsbedingungen der Siliconkautschukmasse Probleme bereiten. Im Fall der im Spritzguss-Verfahren zu verarbeitenden Flüssigsiliconkautschukmassen erfolgt die Vernetzung innerhalb weniger Minuten bei hohen Temperaturen, beispielsweise im Bereich von 180°C, und hydrostatischen Drücken von mehreren hundert Bar, was mit einem rapiden Druckabfall beim.Öffnen der Form verbunden ist. Dies hat zur Folge, dass sich die in der Spritzgußform befindliche heiße LSR-Masse bzw. der beim Öffnen der Spritzgußform noch heiße LSR-Formartikel bezüglich der in der eingesetzten LSR-Masse gelösten flüchtigen Bestandteile, wie Wasser, Luft, kurzkettige Siloxane, Cyclosiloxane, Inhibitoren etc., in einem Übersättigungszustand befindet. Die o.g. Lufttaschen können nun, wenn ihre Größe einen bestimmten kritischen Wert überschreitet, als Nukleations- bzw. Siedekeime fungieren und zur Ausbildung größerer, mit dem unbewaffneten Auge erkennbarer Hohlräume, auch "white spots" genannt, im Siliconelastomerteil führen, wodurch dieses unbrauchbar wird. Anzahl und Größe der in Siliconkautschukmassen vorhandenen Lufttaschen hängen u.a. maßgeblich von den Dispergierbedingungen ab. So sind lange Knetzeiten verbunden mit hohen Scherkräften dem Benetzungsvorgang förderlich, da ein stärkeres Aufbrechen der fraktalen Strukturen (Aggregate, Agglomerate) und damit zugleich eine bessere Infiltration erfolgen kann. Es ist daher anzunehmen, dass die innerhalb sehr kurzer Verweilzeiten ablaufende Dispergierung vorhydrophobierter Kieselsäuren diesbezüglich Nachteile aufweist.

Der vorliegenden Erfindung liegt daher des weiteren die Aufgabe zugrunde, ein Verfahren zur Dispergierung oberflächenbehandelter hochdisperser Füllstoffe in Polyorganosiloxanen zur Verfügung zu stellen, welches vernetzungsfähige Siliconkautschukmassen ergibt, die ein verbessertes Verarbeitungsverhalten zeigen, insbesondere die Bildung von white-spots vermeiden.

Es wurde nun überraschend gefunden, dass die Lagerstabilität von vernetzungsfähigen Siliconkautschukmassen, deren Verarbeitungseigenschaften sowie die mechano-elastischen Eigenschaften der vernetzten Formartikel wesentlich verbessert werden können, wenn während der Compoundierung der Basismischung, enthaltend Polyorganosiloxan und Füllstoff, eine niedermolekulare, nicht reaktive siliziumorganische Verbindung zugegeben wird, die abschließend größtenteils bis vollständig, wieder entfernt wird.

Gegenstand der vorliegenden Erfindung ist daher ein Verfahren zur Herstellung oberflächenbehandelte, hochdisperse Füllstoffe enthaltender Siliconmassen, **dadurch gekennzeichnet, dass**
(a) das Vermischen eines oberflächenbehandelten, hochdispersen Füllstoffs (A) mit einem Polyorganosiloxan (B) in Gegenwart einer niedermolekularen siliziumorganischen Verbindung (C) mit 2 bis 10 Siliziumatomen erfolgt, die keine hydrolysierbare oder kondensierbare funktionelle Gruppen enthält, oder
(b) eine aus einem oberflächenbehandelten, hochdispersen Füllstoff (A) und einem Polyorganosiloxan (B) bestehende Mischung mit einer niedermolekularen siliziumorganischen Verbindung (C) mit 2 bis 10 Siliziumatome, die keine hydrolysierbare oder kondensierbare funktionelle Gruppen enthält, homogen vermischt wird,
und anschließend die füllstoffhaltige Siliconmasse von der niedermolekularen siliziumorganischen Verbindung (C) zumindest zu 80% bezogen auf die Einsatzmenge von der niedermolekularen siliziumorganischen Verbindung (C), befreit wird, wobei es sich bei dem oberflächenbehandelten, hochdispersen Füllstoff (A), dem Polyorganosiloxan (B) und der siliziumorganischen Verbindung (C) jeweils um einen einzigen Stoff oder ein Stoffgemisch handeln kann.

Die nach dem erfindungsgemäßen Verfahren hergestellten Basismischungen können durch Zugabe von für die Vernetzung notwendigen Additiven, wie beispielsweise Peroxiden, Vernetzern, Katalysatoren, Inhibitoren, Photosensibilisatoren und -initiatoren, sowie weiteren Zusätzen, wie beispielsweise Farbpigmenten, Weichmachern, Antistatika, Trennmitteln, zu vernetzungsfähigen Siliconkautschukfertigmassen verarbeitet werden. Die Vernetzung kann beispielsweise peroxidischinduziert erfolgen, durch edelmetallkatalysierte Addition aliphatisch ungesättigter Gruppen an SiH-funktionelle Vernetzer (Hydrosilylierung), durch Kondensationsreaktion oder durch strahlungsinduzierte Vernetzung (UV-, Röntgen-, Alpha-, Beta- oder Gammastrahlung).

Ein wesentliches Merkmal der Erfindung ist, dass niedermolekulare, dementsprechend zumeist leicht flüchtige, nichtreaktive siliziumorganische Verbindungen eine beschleunigte, vollständigere Benetzung und Infiltration hochdisperser, strukturierter Füllstoffe ermöglichen, wodurch der durch Ausbildung polymerüberbrückter Füllstoffpartikel bedingte Viskositätsanstieg während der Lagerung vermieden wird. Zugleich ist mit der vollständigeren Benetzung eine Verminderung von Größe und Anzahl der in strukturierten Füllstoffen befindlichen Lufttaschen verbunden, wodurch die vernetzungsfähigen Siliconkautschukmassen ein verbessertes Verarbeitungsverhalten zeigen, insbesondere nicht oder deutlich weniger zur Ausbildung von white-spots tendieren. Dies ist insofern überraschend, als die niedermolekulare, nichtreaktive siliziumorganische Verbindung (C), die mit dem Füllstoff nur adsorptive Wechselwirkungen eingehen kann, nicht in der Siliconmasse verbleibt, sondern größtenteils bis vollständig, soweit dies technisch möglich bzw. ökonomisch vertretbar ist, wieder aus der Siliconmasse entfernt wird. Hingegen ist der Zusatz von reaktiven, d.h. hydrolysierbare oder kondensierbare Gruppen enthaltenden, siliziumorganischen Verbindungen, die mit den auf der Füllstoffoberfläche vorhandenen Gruppen, wie beispielsweise Hydroxylgruppen, feste kovalente Bindungen ausbilden können, im Allgemeinen mit einem erheblichen Viskositätsanstieg der vernetzungsfähigen Siliconkautschukmasse verbunden.

Da sich der Mischvorgang je nach stofflicher Zusammensetzung und insbesondere Viskosität des Polyorganosiloxans sowie der Art und Einsatzmenge des Füllstoffs sehr unterschiedlich gestaltet, wurden zahlreiche Verfahren und Mischwerkzeuge entwickelt, um ein optimales Vermischen zu gewährleisten.

Mischwerkzeuge, die zur Herstellung der erfindungsgemäßen oberflächenbehandelte hochdisperse Füllstoffe enthaltenden Siliconmassen eingesetzt werden können, sind beispielsweise Rührwerke, Sigmakneter, Stempelkneter, Knetmaschinen, wie beispielsweise in der deutschen Patentschrift DE 40 04 823 C1 beschrieben, Innenmischer, Einschneckenextruder, Doppelschneckenextruder, oszillierende Pilgerschrittkneter, Dissolver, Mischturbinen, Pressmischer und Mischwalzwerke in vielfältigsten Ausführungen. Das erfindungsgemäße Verfahren wird bevorzugt in solchen Mischaggregaten realisiert, die sich für die Scherung höherviskoser Materialien eignen, wie beispielsweise Sigmakneter, Extruder oder die in der deutschen Patentschrift DE 40 05 823 C1 beschriebenen Knetmaschine.

Das Vermischen des Füllstoffs mit dem Polyorganosiloxan sowie gegebenenfalls weiteren Einsatzstoffen kann bei einer Temperatur von -40°C bis +300°C erfolgen, Sofern keine thermolabilen Bestandteile eingemischt werden, ist es bevorzugt, den Mischvorgang bei erhöhter Temperatur bei 50°C bis 250°C, insbesondere bei 100°C bis 230°C, durchzuführen. Aufgrund der Friktionswärme, der Zudosierung der Einsatzstoffe sowie der apparativ bedingten Grenzen in der Temperierung bildet sich im Allgemeinen ein Temperaturprofil entlang der Mischstrecke sowie im zeitlichen Verlauf des Mischvorganges aus, welches durchaus auch größere Temperaturunterschiede aufweisen kann.

Das Vermischen von Füllstoff (A) mit Polyorganosiloxan (B) sowie gegebenenfalls das Einmischen der siliziumorganischen Verbindung (C) kann bei Normaldruck, erhöhtem oder vermindertem Druck erfolgen.

Da sich das erfindungsgemäße Verfahren dadurch auszeichnet, dass entweder das Einmischen des Füllstoffs (A) in das Polyorganosiloxan (B) in Gegenwart der niedermolekularen siliziumorganischen Verbindung (C) erfolgt (Variante a) oder aber in die aus (A) und (B) hergestellte Siliconmasse anschließend die niedermolekulare siliziumorganische Verbindung (C) eingemischt wird (Variante b), welche erst abschließend in beiden Fällen wieder zumindest größtenteils aus der Siliconmasse entfernt wird, ist es erforderlich, Druck- und Temperaturverhältnisse in Abhängigkeit vom Siedeverhalten des Bestandteils (C) so zu wählen, dass die flüchtige siliziumorganische Verbindung (C) während des Dispergiervorgangs gemäß Variante a bzw. nach dem Einmischen von (C) in die aus (A) und (B) bestehende Mischung gemäß Variante b in der Mischung verbleibt und die notwendige Wirksamkeit entfalten kann. Das abschließende Entfernen des Bestandteils (C) aus der Siliconmasse kann durch Temperaturerhöhung (Ausheizen), gegebenenfalls unterstützt durch Vakuum und/oder Schleppgase, unter fortwährendem Kneten/Scheren der Siliconmasse oder durch Extraktion mit einem geeigneten Lösungsmittel erfolgen. Die aus der Siliconmasse entfernte niedermolekulare siliziumorganische Verbindung (C) kann in einer weiterhin bevorzugten Ausführungsform dem erfindungsgemäßen Verfahren erneut zugeführt werden.

In einer besonders bevorzugten Ausführungsform des erfindungsgemäßen Verfahrens erfolgt das Vermischen von Füllstoff (A) und Polyorganosiloxan (B) gegebenenfalls in Anwesenheit von der niedermolekularen siliziumorganischen Verbindung (C) dergestalt, dass zunächst nur ein Teil der Gesamtmenge an Polyorganosiloxan (B) mit dem Füllstoff (A) vermischt wird, um den Mischvorgang durch eine möglichst hochviskose Phase zu führen, wodurch die distributive und insbesondere dispersive Wirksamkeit des Mischens aufgrund der hohen Scherkräfte und der beschleunigten Abbau von Füllstoffagglomeraten und -aggregaten deutlich verbessert wird, und erst im Anschluss daran ein Verdünnen der Siliconmasse mit der restlichen Menge an Polyorganosiloxan erfolgt, bis die gewünschte Zusammensetzung der Siliconmasse erreicht wird. Diese besonders bevorzugte Ausführungsform betrifft sowohl das erfindungsgemäße Verfahren nach Variante a als auch nach Variante b.

Im Fall des erfindungsgemäßen Verfahrens gemäß Variante a ist es folglich besonders bevorzugt, in einem ersten Schritt die Gesamtmenge an niedermolekularen siliziumorganischen Verbindung (C) mit einer Teilmenge an Polyorganosiloxan (B) vorzulegen und darin die Gesamtmenge an Füllstoff (A), gegebenenfalls portionsweise, zu dispergieren. In einem zweiten Schritt wird die aus Füllstoff (A), einer Teilmenge des Polyorganosiloxan (B) und der niedermolekularen siliziumorganischen Verbindung (C) bestehende Mischung mit der restlichen Menge an Polyorganosiloxan (B) verdünnt. Im dritten Schritt erfolgt das Entfernen der niedermolekularen siliziumorganischen Verbindung (C). Das Entfernen der niedermolekularen siliziumorganischen Verbindung (C) kann bevorzugt auch vor dem Verdünnen mit der restlichen Menge an Polyorganosiloxan (B) erfolgen.

Im Fall des erfindungsgemäßen Verfahrens gemäß Variante b ist es folglich besonders bevorzugt, in einem ersten Schritt die Gesamtmenge an Füllstoff (A), gegebenenfalls portionsweise, in einer Teilmenge an Polyorganosiloxan (B) zu dispergieren. Im zweiten Schritt erfolgt das Einmischen und homogene Verteilen der niedermolekularen siliziumorganischen Verbindung (C) in der hochviskosen Siliconmasse, welche im dritten Schritt mit der restlichen Menge an Polyorganosiloxan (B) verdünnt und abschließend von der niedermolekularen siliziumorganischen Verbindung (C) befreit wird, wobei auch in diesem Fall das Entfernen der niedermolekularen siliziumorganischen Verbindung (C) vor dem Verdünnen mit der restlichen Menge an Polyorganosiloxan (B) erfolgen kann.

Als Füllstoffe (A) kommen sämtliche üblicherweise in Siliconmassen eingesetzten oberflächenbehandelten hochdispersen Füllstoffe mit einer nach BET gemessenen spezifischen Oberfläche von mindestens 50 m²/g, bevorzugt 100 bis 800 m²/g, besonders bevorzugt 150 bis 400 m²/g, in Frage.

Typischerweise handelt es sich um Kieselsäuren, Ruße und feinteilige Oxide, Hydroxide, Carbonate, Sulfate oder Nitride von Metallen, wie Silizium, Aluminium, Titan, Zirkonium, Cer, Zink, Magnesium, Calcium, Eisen und Bor.

Die im erfindungsgemäßen Verfahren bevorzugt eingesetzten Füllstoffe sind pyrogen hergestellte Kieselsäuren, gefällte Kieselsäuren, unter Erhalt der Struktur entwässerte Kieselsäurehydrogele, auch Aerogele genannt, sowie Ruße, sofern diese infolge einer Oberflächenbehandlung einen Kohlenstoffgehalt von mindestens 0.01 bis maximal 20 Gew.-%, bevorzugt zwischen 0.1 und 10 Gew.-%, besonders bevorzugt zwischen 0.5 bis 5 Gew.-% aufweisen. Besonders bevorzugt sind pyrogen hergestellte Kieselsäuren.

Der Kohlenstoffgehalt der oberflächenbehandelten Füllstoffe (A) kann durch geeignete, dem Fachmann wohl bekannte Verfahren zur Oberflächenmodifizierung (Hydrophobierung) feinteiliger Füllstoffe erzielt werden. Bevorzugt verwendete Hydrophobierungsmittel sind siliziumorganische Verbindungen, die mit der Füllstoffoberfläche unter Ausbildung kovalenter Bindungen zu reagieren vermögen oder dauerhaft an der Füllstoffoberfläche physisorbiert werden.

Bevorzugte Hydrophobierungsmittel entsprechen der allgemeinen durchschnittlichen Formeln (I) oder (II)

R¹₄₋ₓSiAₓ (I)

(R¹₃Si)_{y}B (II),

worin
- R¹: gleiche oder verschiedene monovalente, gegebenenfalls halogensubstituierten Kohlenwasserstoffrest mit 1 bis 12 Kohlenstoffatomen,
- A: Halogen, -OH, -OR² oder -OCOR²,
- B: -NR³_{3-y},
- R²: gleiche oder verschiedene monovalente Kohlenwasserstoffrest mit 1 bis 12 Kohlenstoffatomen,
- R³: Wasserstoffatom oder die gleiche Bedeutung wie R¹,
- x: 1, 2 oder 3, und
- y: 1 oder 2,
bedeuten.

Weiterhin bevorzugte Hydrophobierungsmittel sind Organopolysiloxane bestehend aus Einheiten der allgemeinen durchschnittlichen Formel (III)

R⁴_{z}SiO_{(4-z)/2} (III),

worin
- R⁴: gleiche oder verschiedene monovalente, gegebenenfalls halogensubstituierte Kohlenwasserstoffreste mit 1 bis 12 Kohlenstoffatomen, Halogen-, Hydroxy-, -OR² oder -OCOR² Gruppen und
- z: 1, 2 oder 3
bedeuten.

Zu den bevorzugten Hydrophobierungsmitteln zählen beispielsweise Alkylchlorsilane, wie beispielsweise Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.-Butyldimethylchlorsilan; Alkylalkoxysilane, wie beispielsweise Dimethyldimethoxysilan, Dimethyldiethoxysilan, Trimethylmethoxysilan und Trimethylethoxysilan; Trimethylsilanol; zyklische Diorgano(poly)siloxane, wie beispielsweise Octamethylcyclotetrasiloxan, Dekamethylcyclopentasiloxan; lineare Diorganopolysiloxane, wie beispielsweise Dimethylpolysiloxane mit Trimethylsiloxy-Endgruppen sowie Dimethylpolysiloxane mit Silanol- oder Alkoxy-Endgruppen; Disilazane, wie beispielsweise Hexaalkyldisilazane, insbesondere Hexamethyldisilazan, Divinyltetramethyldisilazan, Bis(trifluorpropyl)tetramethyldisilazan; zyklische Dimethylsilazane, wie beispielsweise Hexamethylcyclotrisilazan. Es können auch Mischungen dieser Hydrophobierungsmittel eingesetzt werden. Die Hydrophobierung des Füllstoffs kann in einem oder mehreren Schritten erfolgen, wobei im Fall mehrerer Hydrophobierschritte auch unterschiedliche Hydrophobierungsmittel eingesetzt werden können.

Die in HTV-, LSR- und RTV-Massen bevorzugt eingesetzten Polyorganosiloxane (B) genügen der allgemeinen durchschnittlichen Formel (IV)

R**⁵ₐ**R**⁶_{b}**SiO**_{(4-a-b)/2}** (IV),

worin
- R**⁵**: gleiche oder verschiedene monovalente, gegebenenfalls halogensubstituierte oder Heteroatome enthaltende Kohlenwasserstoffreste mit 1 bis 20 Kohlenstoffatomen, die frei von aliphatisch ungesättigten Gruppen sind,
- R**⁶**: gleiche oder verschiedene monovalente, aliphatisch ungesättigte, gegebenenfalls halogensubstituierte oder Heteroatome enthaltende Kohlenwasserstoffreste mit 1 bis 10 Kohlenstoffatomen, die einer Hydrosilylierungsreaktion zugänglich sind,
- a: eine positive Zahl zwischen 1 und 2,997 und
- b: eine positive Zahl zwischen 0.003 und 2
mit der Maßgabe bedeuten, dass 1,5 < (a+b) < 3,0 gilt und dass pro Molekül durchschnittlich mindestens zwei aliphatisch ungesättigte Reste enthalten sind.

Die bei 25°C bestimmte Viskosität der Polyorganosiloxane (B) liegt zwischen ca. 0,1 Pa•s und ca. 40.000 Pa•s, bevorzugt werden Viskositäten zwischen 100 mPa•s und 30.000 Pa•s. Besonders bevorzugt ist der Viskositätsbereich zwischen 1 und 30.000 Pa•s. Je nach Art der aus der Basismischung herzustellenden vernetzungsfähigen Siliconkautschukmasse, werden unterschiedliche Viskositätsbereiche besonders bevorzugt. Für die dem Fachmann als RTV-2 (*room temperature vulcanizing*) bekannten Massen werden Viskositäten zwischen 100 und 100.000 mPa•s besonders bevorzugt, für LSR (*liquid silicone rubber*) zwischen 10 und 5.000 Pa•s, für HTV (*high temperature vulcanizing*) zwischen 2.000 und 40.000 Pa•s.

Bevorzugte Beispiele für Reste R⁵ sind Alkylreste, wie Methyl-, Ethyl-, Propyl-, Isopropyl-, tert.-Butyl-, n-Pentyl-, isoPentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und/oder mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. R**⁵** kann auch eine OH-Gruppe sein. Bevorzugte Reste R**⁵** sind Methyl-, Phenyl- und 3,3,3-Trifluorpropylrest. Besonders bevorzugter Rest R**⁵** ist der Methylrest.

Bevorzugte Beispiele für Reste R**⁶**, sind Alkenyl- und/oder Alkinylreste, wie beispielsweise Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie beispielsweise Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie beispielsweise Styryl- oder Styrylethylrest, sowie halogenierte und/oder Heteroatome enthaltende Derivate der voranstehenden Reste, wie beispielsweise 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste R**⁶** sind der Vinyl-, Allyl- und 5-Hexenylrest. Besonders bevorzugter Rest R**⁶** ist der Vinylrest.

Es kann sich um ein einziges Polyorganosiloxan als auch um eine Mischung unterschiedlicher Polyorganosiloxane handeln.

Die 2 bis 10 Siliziumatome enthaltende siliziumorganische Verbindung (C) enthält keine hydrolysierbaren oder kondensierbaren funktionellen Gruppen. Die siliziumorganische Verbindung (C) kann ein Silan sein, wie beispielsweise Tetramethylsilan, Ethyltrimethylsilan, Vinyltrimethylsilan, Allyltrimethylsilan, Allyltriisopropylsilan, Phenyltrimethylsilan, Diphenyldimethylsilan, Benzyltrimethylsilan, Hexamethyldisilan, Bis(trimethylsilyl)methan, Cyclopentadienyltrimethylsilan, Acetyltrimethylsilan, Aminopropyltrimethylsilan, 3-Aminopropylmethylbis(trimethylsiloxy)silan, Bis(phenylethinyl)dimethylsilan oder Trifluorpropyltrimethylsilan; ein lineares, verzweigtes oder zyklisches Siloxan, wie beispielsweise Hexamethyldisiloxan, Octamethyltrisiloxan, Bis(cyanopropyl)tetramethyldisiloxan, Bis(tridecafluor-1,1,2,2-tetrahydrooctyl)tetramethyldisiloxan, 3-Phenylheptamethyltrisiloxan, 3-(3,3,3-Trifluorpropyl)heptamethyltrisiloxan, (3,3,3-Trifluorpropyl)methylcyclotrisiloxan oder Pentavinylpentamethylcyclopentasiloxan, oder sonstige siliziumorganische Verbindungen, wie beispielsweise Octavinyl-T8-silsesquioxan.

Die siliziumorganische Verbindung (C) ist vorzugsweise ein lineares oder cyclisches Oligosiloxan mit 2 bis 10 Siliziumatomen, bevorzugt Hexamethyldisiloxan, Octamethyltrisiloxan, 1,3-Divinyltetramethyldisiloxan, Octamethylcyclotetrasiloxan, Dekamethylcyclopentasiloxan, und 1,3,5,7-Tetravinyl-1,3,5,7-tetramethylcyclotetrasiloxan, besonders bevorzugt ist Hexamethyldisiloxan.

### Beispiele

### Beispiel 1 (nicht erfindungsgemäß):

In einem Kneter wurden 160 g eines vinyldimethylsiloxy-terminierten Polydimethylsiloxans mit einer Viskosität von 20.000 mPa•s (25°C) vorgelegt und mit 30 g Hexamethyldisilazan und 9,5 g Wasser gemischt, anschließend mit 110 g pyrogener Kieselsäure mit einer BET-Oberfläche von 300 m²/g portionsweise vermischt, auf 90°C erwärmt und anschließend eine Stunde geknetet. Danach wurde mit 120 g vinyldimethylsiloxyterminiertem Polydimethylsiloxan mit einer Viskosität von 20.000 mPa•s verdünnt und anschließend bei 150°C eine Stunde flüchtige Bestandteile im Vakuum entfernt.

### Beispiel 2 (nicht erfindungsgemäß):

In einem Kneter wurden 160 g eines vinyldimethylsiloxy-terminierten Polydimethylsiloxans mit einer Viskosität von 20.000 mPa•s (25°C) vorgelegt und mit 120 g vorhydrophobierter pyrogener Kieselsäure mit einer BET-Oberfläche von 300 m²/g, einem Kohlenstoffgehalt von 4,1% vermischt, auf 90°C erwärmt und anschließend eine Stunde geknetet. Danach wurde mit 120 g vinyldimethylsiloxy-terminiertem Polydimethylsiloxan mit einer Viskosität von 20.000 mPa•s verdünnt und anschließend bei 150°C eine Stunde flüchtige Bestandteile im Vakuum entfernt.

### Beispiel 3 (nicht erfindungsgemäß):

In einem Kneter wurden 153 g eines vinyldimethylsiloxy-terminierten Polydimethylsiloxans mit einer Viskosität von 20.000 mPa•s (25°C) und 7 g eines hydroxydimethylsiloxyterminierten Polydimethylsiloxans mit einer Viskosität von 30 mm²/sec und einer mittleren Kettenlänge von 10 vorgelegt sowie mit 120 g vorhydrophobierter pyrogener Kieselsäure mit einer BET-Oberfläche von 300 m²/g, einem Kohlenstoffgehalt von 4,1% vermischt, auf 90°C erwärmt und anschließend eine Stunde geknetet. Danach wurde mit 120 g vinyldimethylsiloxy-terminiertem Polydimethylsiloxan mit einer Viskosität von 20.000 mPa•s verdünnt und anschließend bei 150°C eine Stunde flüchtige Bestandteile im Vakuum entfernt.

### Beispiel 4 (nicht erfindungsgemäß):

In einem Kneter wurden 160 g eines vinyldimethylsiloxyterminierten Polydimethylsiloxans mit einer Viskosität von 20.000 mPa•s (25°C) und 7 g Hexamethyldisiloxan vorgelegt und mit 120 g vorhydrophobierter pyrogener Kieselsäure mit einer BET-Oberfläche von 300 m²/g, einem Kohlenstoffgehalt von 4,1% vermischt, auf 90°C erwärmt und anschließend eine Stunde geknetet. Danach wurde mit 120 g vinyldimethylsiloxy-terminiertem Polydimethylsiloxan mit einer Viskosität von 20.000 mPa•s verdünnt und anschließend eine Stunde ohne Vakuum bei 50°C geknetet. Der Restgehalt an Hexamethyldisiloxan in der Siliconmasse betrug 1,5%.

### Beispiel 5 (erfindungsgemäß):

In einem Kneter wurden 160 g eines vinyldimethylsiloxy-terminierten Polydimethylsiloxans mit einer Viskosität von 20.000 mPa•s (25°C) und 7 g Hexamethyldisiloxan vorgelegt und mit 120 g vorhydrophobierter pyrogener Kieselsäure mit einer BET-Oberfläche von 300 m²/g, einem Kohlenstoffgehalt von 4,1% vermischt, auf 90°C erwärmt und anschließend eine Stunde geknetet. Danach wurde mit 120 g vinyldimethylsiloxyterminiertem Polydimethylsiloxan mit einer Viskosität von 20.000 mPa•s verdünnt und anschließend bei 150°C eine Stunde flüchtige Bestandteile im Vakuum entfernt. Der Restgehalt an Hexamethyldisiloxan in der Siliconmasse betrug 0,02%.

### Beispiel 6 (nicht erfindungsgemäß):

In einem Kneter wurden 160 g eines vinyldimethylsiloxy-terminierten Polydimethylsiloxans mit einer Viskosität von 20.000 mPa•s (25°C) und 7 g Decamethylcyclopentasiloxan vorgelegt und mit 120 g vorhydrophobierter pyrogener Kieselsäure mit einer BET-Oberfläche von 300 m²/g, einem Kohlenstoffgehalt von 4,1% vermischt, auf 90°C erwärmt und anschließend eine Stunde geknetet. Danach wurde mit 120 g vinyldimethylsiloxy-terminiertem Polydimethylsiloxan mit einer Viskosität von 20.000 mPa•s verdünnt und anschließend eine Stunde ohne Vakuum bei 50°C geknetet. Der Restgehalt an Decamethylcyclopentasiloxan in der Siliconmasse betrug 1,6%.

### Beispiel 7 (erfindungsgemäß):

In einem Kneter wurden 160 g eines vinyldimethylsiloxy-terminierten Polydimethylsiloxans mit einer Viskosität von 20.000 mPa•s (25°C) und 7 g Decamethylcyclopentasiloxan vorgelegt und mit 120 g vorhydrophobierter pyrogener Kieselsäure mit einer BET-Oberfläche von 300 m²/g, einem Kohlenstoffgehalt von 4,1% vermischt, auf 90°C erwärmt und anschließend eine Stunde geknetet. Danach wurde mit 120 g vinyldimethylsiloxy-terminiertem Polydimethylsiloxan mit einer Viskosität von 20.000 mPa•s verdünnt und anschließend bei 150°C eine Stunde flüchtige Bestandteile im Vakuum entfernt. Der Restgehalt an Decamethylcyclopentasiloxan in der Siliconmasse betrug 0,04%.

### Beispiel 8 (nicht erfindungsgemäß):

In einem kontinuierlich arbeitenden Mischaggregat wurden 80 kg/h vinyldimethylsiloxy-terminiertes Polydimethylsiloxan mit einer Viskosität von 20.000 mPa•s (25°C) sowie 60 kg/h vorhydrophobierte pyrogene Kieselsäure mit einer BET-Oberfläche von 300 m²/g und einem Kohlenstoffgehalt von 4,1% dosiert und bei 95°C kompaktiert. Anschließend wurde vinyldimethylsiloxy-terminiertes Polydimethylsiloxan mit einer Viskosität von 20.000 mPa•s (25°C) zudosiert und bei einer Temperatur von 90°C geknetet. Die Siliconmasse wurde in ein Entgasungsgefäß gefördert. Die Gesamtverweilzeit der Siliconmasse in der Knetmaschine betrug ca. 15 Minuten. In dem Entgasungsgefäß wurden flüchtige Bestandteile bei 90°C im Vakuum entfernt.

### Beispiel 9 (erfindungsgemäß):

In einem kontinuierlich arbeitenden Mischaggregat wurden 80 kg/h vinyldimethylsiloxy-terminiertes Polydimethylsiloxan mit einer Viskosität von 20.000 mPa•s (25°C), 4 kg/h Hexamethyldisiloxan sowie 60 kg/h vorhydrophobierte pyrogene Kieselsäure mit einer BET-Oberfläche von 300 m²/g und einem Kohlenstoffgehalt von 4,1% dosiert und bei 95°C kompaktiert. Anschließend wurde vinyldimethylsiloxy-terminiertes Polydimethylsiloxan mit einer Viskosität von 20.000 mPa•s (25°C) zudosiert und bei einer Temperatur von 90°C geknetet. Die Siliconmasse wurde in ein Entgasungsgefäß gefördert. Die Gesamt-Verweilzeit der Siliconmasse in der Knetmaschine betrug ca. 15 Minuten. In dem Entgasungsgefäß wurden flüchtige Bestandteile bei 90°C im Vakuum entfernt. Der Restgehalt an Hexamethyldisiloxan in der Siliconmasse betrug 0,03%.

### Beispiel 10 (nicht erfindungsgemäß):

280 Masseteile eines vinyldimethylsiloxy-terminierten Polydimethylsiloxans, das bei 25°C einer Viskosität von 13.000 Pas aufwies (entsprechend einer mittleren Molmasse von ca. 500.000 g/mol), wurden mit 120 Masseteilen einer hydrophoben pyrogenen Kieselsäure mit einer Oberfläche nach BET von 300 m²/g und einem Kohlenstoffgehalt von 4,1 Gew.-%, die in Portionen zudosiert wurde, während einer Stunde in einem Doppel-Z-Kneter bei 70°C zu einer homogenen Grundmasse vermischt. Diese Masse wurde 3 Stunden bei 150°C im Ölpumpenvakuum geknetet und ausgeheizt.

### Beispiel 11 (erfindungsgemäß):

280 Masseteile eines vinyldimethylsiloxy-terminierten Polydimethylsiloxans, das bei 25°C einer Viskosität von 13.000 Pas aufwies (entsprechend einer mittleren Molmasse von ca. 500.000 g/mol) und 7 g Hexamethyldisiloxan, wurden mit 120 Masseteilen einer hydrophoben pyrogenen Kieselsäure mit einer Oberfläche nach BET von 300 m²/g und einem Kohlenstoffgehalt von 4,1 Gew.-%, die in Portionen zudosiert wurde, während einer Stunde in einem Doppel-Z-Kneter bei 70°C zu einer homogenen Grundmasse vermischt. Diese Masse wurde 3 Stunden bei 150°C im Ölpumpenvakuum geknetet und ausgeheizt. Der Restgehalt an Hexamethyldisiloxan in der Siliconmasse betrug 0,03%.

**Tabelle 1: Einfluss von niedermolekularen siliziumorganischen Verbindungen bei der Herstellung von LSR-Siliconmassen auf die Lagerstabilität bei 25°C.**

| **Beispiel** | **Niedermolekulare, siliziumorganische Verbindung [Gew.-%]^{#}** | | **Viskosität [Pa•s]** | |
|---|---|---|---|---|
| | **Zusatz** | **Rest-Gehalt** | **Anfangs** | **Nach 4 Wochen bei 25°C** |
| **1*** | - | - | 920 | 1.250 |
| **2*** | - | - | 1.020 | 1.390 |
| **3*** | 1,8% ODMS | - | 1.150 | 1.750 |
| **4*** | 1,8% HDMS | 1,5% HDMS | 920 | 1.210 |
| **5** | 1,8% HDMS | 0,02% HDMS | 950 | 930 |
| **6*** | 1,8% DMPS | 1,6% DMPS | 940 | 1.180 |
| **7** | 1,8% DMPS | 0,04% DMPS | 930 | 960 |
| **8*** | - | - | 930 | 1.100 |
| **9** | 1,8% HDMS | 0,03% HDMS | 940 | 960 |

| | | | | |
|---|---|---|---|---|
| * nicht erfindungsgemäß # bezogen auf die Gesamtsiliconmasse HMDS Hexamethyldisiloxan DMPS Decamethyl-cyclopentasiloxan ODMS SiOH-terminiertes Oligodimethyl-siloxan | | | | |

Aus der Tabelle 1 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Lagerstabilität der LSR-Siliconmassen erheblich verbessert.

**Tabelle 2: Einfluss von niedermolekularen siliziumorganischen Verbindungen bei der Herstellung von HTV-Siliconmassen auf die Lagerstabilität bei 25°C.**

| **Beispiel** | **Niedermolekulare, siliziumorganische Verbindung [Gew.-%]^{#}** | | **Viskosität [Pa•s]** | |
|---|---|---|---|---|
| | **Zusatz** | **Rest-Gehalt** | **Anfangs** | **Nach 4 Wochen bei 25°C** |
| **10*** | - | - | 30 | 33 |
| **11** | 1,8% HMDS | 0,03% HMDS | 30 | 30 |

| | | | | |
|---|---|---|---|---|
| * nicht erfindungsgemäß # bezogen auf die Gesamtsiliconmasse HMDS Hexamethyldisiloxan | | | | |

Aus der Tabelle 2 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Lagerstabilität der HTV-Siliconmassen erheblich verbessert.

### Beispiel 12 (nicht erfindungsgemäß):

Zu 110 g der in Beispiel 1 beschriebenen Siliconmasse wurden 6 g vinyldimethylsiloxy-terminiertes Polydimethylsiloxan mit einer Viskosität von 20.000 mPa•s (25°C) und 0,19 g einer Lösung, die einen Platin-sym-Divinyltetramethyldisiloxan-Komplex und 1 Gew.-% Platin enthält, hinzugefügt (A-Masse). Die Herstellung der B-Masse erfolgte durch Mischen von 110 g der in Beispiel 1 beschriebenen Siliconmasse mit 4,1 g eines Mischpolymerisats aus Dimethylsiloxy-, Methylhydrogensiloxy- und Trimethylsiloxy-Einheiten mit einer Viskosität von 300 mPa•s bei 25°C und einem SiH-Gehalt von 0,47% sowie 0,16 g Ethinylcyclohexanol. Durch Mischen der Komponenten A und B im Verhältnis 1:1 wurde die additionsvernetzende Siliconmasse anschließend in einer hydraulischen Presse bei einer Temperatur von 165°C innerhalb von 5 Minuten zu einer Siliconelastomerfolie vernetzt und 4 Stunden bei 200°C getempert.

### Beispiel 13 (nicht erfindungsgemäß):

Im Unterschied zu Beispiel 12 wurde die in Beispiel 2 hergestellte Siliconmasse verwendet.

### Beispiel 14 (nicht erfindungsgemäß):

Im Unterschied zu Beispiel 12 wurde die in Beispiel 3 hergestellte Siliconmasse verwendet.

### Beispiel 15 (nicht erfindungsgemäß):

Im Unterschied zu Beispiel 12 wurde die in Beispiel 4 hergestellte Siliconmasse verwendet.

### Beispiel 16 (erfindungsgemäß):

Im Unterschied zu Beispiel 12 wurde die in Beispiel 5 hergestellte Siliconmasse verwendet.

### Beispiel 17 (nicht erfindungsgemäß):

Im Unterschied zu Beispiel 12 wurde die in Beispiel 6 hergestellte Siliconmasse verwendet.

### Beispiel 18 (erfindungsgemäß):

Im Unterschied zu Beispiel 12 wurde die in Beispiel 7 hergestellte Siliconmasse verwendet.

### Beispiel 19 (nicht erfindungsgemäß):

Im Unterschied zu Beispiel 12 wurde die in Beispiel 8 hergestellte Siliconmasse verwendet.

### Beispiel 20 (erfindungsgemäß):

Im Unterschied zu Beispiel 12 wurde die in Beispiel 9 hergestellte Siliconmasse verwendet.

### Beispiel 21 (nicht erfindungsgemäß):

220 g der in Beispiel 10 beschriebenen Siliconmasse wurden auf einer Walze bei einer Temperatur von 20°C mit 0,20 g Ethinylcyclohexanol, 4,1 g eines Mischpolymerisats aus Dimethylsiloxy-, Methylhydrogensiloxy- und Trimethylsiloxy-Einheiten mit einer Viskosität von 300 mPa•s bei 25°C und einem SiH-Gehalt von 0,47% sowie 3,0 mg Bis(phenylacetylid)cyclooctadienplatin (II), in 0,5 g vinyldimethylsiloxy-terminiertem Polydimethylsiloxan mit einer Viskosität von 100.000 mPa•s (25°C) suspendiert, zu einer homogenen Masse vermischt. Diese additionsvernetzende Siliconmasse wurde anschließend in einer hydraulischen Presse bei einer Temperatur von 165°C innerhalb von 5 Minuten zu einer Siliconelastomerfolie vernetzt und 4 Stunden bei 200°C getempert.

### Beispiel 22 (erfindungsgemäß):

Im Unterschied zu Beispiel 21 wurde die in Beispiel 11 hergestellte Siliconmasse verwendet.

### Beispiel 23 (nicht erfindungsgemäß):

220 g der in Beispiel 10 beschriebenen Siliconmasse wurden auf einer Walze bei einer Temperatur von 20°C mit 0,9 g Bis-(2,4-dichlorbenzoyl)peroxid zu einer homogenen Masse vermischt. Diese peroxidisch vernetzende Siliconmasse wurde anschließend in einer hydraulischen Presse bei einer Temperatur von 165°C innerhalb von 5 Minuten zu einer Siliconelastomerfolie vernetzt und 4 Stunden bei 200°C getempert.

### Beispiel 24 (erfindungsgemäß):

Im Unterschied zu Beispiel 23 wurde die in Beispiel 11 hergestellte Siliconmasse verwendet.

**Tabelle 3: Einfluss von niedermolekularen siliziumorganischen Verbindungen bei der Herstellung von Siliconmassen auf die Lagerstabilität der daraus hergestellten unvernetzten LSR A- und B-Massen bei 25°C.**

| **Beispiel** | **Viskosität A-Masse [Pa•s]** | | **Viskosität B-Masse [Pa•s]** | |
|---|---|---|---|---|
| | **Anfangs** | **nach 4 Wochen bei 25°C** | **Anfangs** | **Nach 4 Wochen bei 25°C** |
| **12*** | 710 | 1.010 | 740 | 1.150 |
| **13*** | 720 | 1.050 | 710 | 1.130 |
| **14*** | 860 | 1.520 | 920 | 1.790 |
| **15*** | 720 | 1.000 | 750 | 980 |
| **16** | 730 | 740 | 720 | 790 |
| **17*** | 750 | 990 | 750 | 920 |
| **18** | 740 | 780 | 720 | 760 |
| **19*** | 730 | 980 | 710 | 920 |
| 20 | 760 | 750 | 730 | 760 |

| | | | | |
|---|---|---|---|---|
| * nicht erfindungsgemäß | | | | |

Aus der Tabelle 3 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Lagerstabilität der daraus hergestellten unvernetzten LSR A- und B-Massen erheblich verbessert.

**Tabelle 4: Einfluss von niedermolekularen siliziumorganischen Verbindungen bei der Herstellung von Siliconmassen auf die Lagerstabilität der unvernetzten HTV-Massen bei 25°C.**

| **Beispiel** | **Viskosität der unvernetzten Siliconmasse [Mooney-Viskosität, Anfangswert]** | |
|---|---|---|
| | **Anfangs** | **Nach 4 Wochen bei 25°C** |
| **21*** | 29 | 33 |
| **22** | 29 | 29 |
| **23*** | 30 | 32 |
| **24** | 30 | 30 |

Aus der Tabelle 4 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Lagerstabilität der daraus vernetzbaren HTV-Siliconmassen erheblich verbessert.

**Tabelle 5: Einfluss von niedermolekularen siliziumorganischen Verbindungen bei der Herstellung von Siliconmassen auf die Mechanik der daraus hergestellten Siliconelastomere.**

| **Beispiel** | **Harte [Shore A]** | **Reißfestig keit [N/mm²]** | **Reiß dehnung [%]** | **Weiterreiß widerstand [N/mm]** | **Druckver formungs rest [%]** |
|---|---|---|---|---|---|
| **12*** | 39 | 9,5 | 650 | 25 | 15 |
| **13*** | 40 | 9,6 | 640 | 25 | 16 |
| **14*** | 41 | 9,2 | 600 | 21 | 25 |
| **15*** | 40 | 9,7 | 630 | 26 | 15 |
| **16** | 40 | 10,3 | 740 | 31 | 10 |
| **17*** | 40 | 9,5 | 650 | 25 | 16 |
| **18** | 40 | 10,6 | 780 | 32 | 9. |
| **19*** | 41 | 9,7 | 660 | 26 | 14 |
| **20** | 41 | 10,8 | 730 | 33 | 10 |

| | | | | | |
|---|---|---|---|---|---|
| * nicht erfindungsgemäß | | | | | |

Aus der Tabelle 5 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die mechanischen Eigenschaften der daraus hergestellten Siliconelastomere deutlich verbessert.

**Tabelle 6: Einfluss von niedermolekularen siliziumorganischen Verbindungen bei der Herstellung von Siliconmasse auf die Mechanik der daraus hergestellten Siliconelastomere.**

| **Bei spiel** | **Härte [Shore A]** | **Reißfestig keit [N/mm²]** | **Reiß dehnung [%]** | **Weiterreiß widersand [N/mm]** | **Druckver formungs rest [%]** |
|---|---|---|---|---|---|
| 21* | 39 | 11,3 | 1050 | 29 | 12 |
| 22 | 40 | 12,5 | 1120 | 34 | 9 |
| 23* | 40 | 11,1 | 800 | 22 | 20 |
| 24 | 41 | 12,0 | 870 | 26 | 17 |

| | | | | | |
|---|---|---|---|---|---|
| * nicht erfindungsgemäß | | | | | |

Aus der Tabelle 6 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die mechanischen Eigenschaften der daraus hergestellten Siliconelastomere deutlich verbessert.

**Tabelle 7: Einfluss von niedermolekularen siliziumorganischen Verbindung bei der Herstellung von Siliconmassen auf die Verarbeitung der unvernetzten LSR A- und B-Massen im Spritzguss, wobei die A- und B-Massen im Verhältnis 1:1 vermischt, in eine Schnullerform dosiert und bei 180°C im Schnullerwerkzeug vernetzt wurden.**

| **Beispiel** | **Fehlerfrei Formartikel [%]** | **Auftreten von white-spots** |
|---|---|---|
| **12*** | 70 | häufig |
| **13*** | 70 | häufig |
| **14*** | 50 | sehr oft |
| **15*** | 65 | häufig |
| **16** | 100 | keine |
| **17*** | 75 | häufig |
| **18** | 100 | keine |
| **19*** | 70 | häufig |
| **20** | 100 | keine |

| | | |
|---|---|---|
| * nicht erfindungsgemäß | | |

Aus der Tabelle 7 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Verarbeitung der unvernetzten LSR-Siliconmassen im Spritzguss erheblich verbessert und die Ausbildung von Blasen verhindert.

**Tabelle 8: Einfluss von niedermolekularen siliziumorganischen Verbindungen bei der Herstellung von Siliconmassen auf die Verarbeitung der unvernetzten, additionsvernetzenden HTV-Massen im Spritzguss, wobei die unvernetzten Massen in eine Schnullerform dosiert und bei 180°C im Schnullerwerkzeug vernetzt wurden.**

| **Beispiel** | **Fehlerfrei Formartikel [%]** | **Auftreten von white-spots** |
|---|---|---|
| **21*** | 80 | häufig |
| **22** | 100 | keine |

| | | |
|---|---|---|
| * nicht erfindungsgemäß | | |

Aus der Tabelle 8 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Verarbeitung der unvernetzten HTV-Siliconmassen im Spritzguss erheblich verbessert und die Ausbildung von.Blasen verhindert.

**Tabelle 9: Einfluss von niedermolekularen siliziumorganischen Verbindung bei der Herstellung von Siliconmassen auf die Verarbeitung der unvernetzten, peroxidisch vernetzenden HTV-Massen im Extrusionsverfahren, wobei die unvernetzten Massen zu einem Schlauch bei 250°C vernetz wurden.**

| **Beispiel** | **Auftreten von Blasen** |
|---|---|
| **23*** | häufig |
| **24** | keine |

| | |
|---|---|
| * nicht erfindungsgemäß | |

Aus der Tabelle 9 ist ersichtlich, dass der Zusatz einer niedermolekularen siliziumorganischen Verbindung während der Einarbeitung oberflächenbehandelter Kieselsäure in Polyorganosiloxane und anschließendes Entfernen der niedermolekularen siliziumorganischen Verbindung die Verarbeitung der unvernetzten HTV-Siliconmassen im Extrusionsverfahren erheblich verbessert und die Ausbildung von Blasen verhindert.

Die Charakterisierung der Siliconelastomereigenschaften erfolgte gemäß DIN 53505 (Shore A), DIN 53504-S1 (Reißfestigkeit und Reißdehnung), ASTM D (Weiterreißwiderstand) und DIN 53517 (Druckverformungsrest). Die Viskosität wurde bei einer Scherrate von 0,9 s⁻¹ bestimmt. Die in der Tabelle 2 und 4 angegebenen Mooney-Werte bedeuten die Mooney-Anfangswerte (DIN 53523).

## Patentansprüche

1. Verfahren zur Herstellung oberflächenbehandelte, hochdisperse Füllstoffe enthaltender Siliconmassen, **dadurch gekennzeichnet, dass**
(a) das Vermischen eines oberflächenbehandelten, hochdispersen Füllstoffs (A) mit einem Polyorganosiloxan (B) in Gegenwart einer niedermolekularen siliziumorganischen Verbindung (C) mit 2 bis 10 Siliziumatomen erfolgt, die keine hydrolysierbare oder kondensierbare funktionelle Gruppen enthält, oder
(b) eine aus einem oberflächenbehandelten, hochdispersen Füllstoff (A) und einem Polyorganosiloxan (B) bestehende Mischung mit einer niedermolekularen siliziumorganischen Verbindung (C) mit 2 bis 10 Siliziumatome, die keine hydrolysierbare oder kondensierbare funktionelle Gruppen enthält, homogen vermischt wird,
und anschließend die füllstoffhaltige Siliconmasse von der niedermolekularen siliziumorganischen Verbindung (C) zumindest zu 80% bezogen auf die Einsatzmenge von der niedermolekularen siliziumorganischen Verbindung (C), befreit wird, wobei es sich bei dem oberflächenbehandelten, hochdispersen Füllstoff (A), dem Polyorganosiloxan (B) und der siliziumorganischen Verbindung (C) jeweils um einen einzigen Stoff oder ein Stoffgemisch handeln kann.

2. Verfahren gemäß Anspruch 1, **dadurch gekennzeichnet, dass** in eine Mischung aus 100 Gew.-Teilen Polyorganosiloxan (B) und 0.01 bis 30 Gew.-Teilen siliziumorganischer Verbindung (C) und gegebenenfalls von bis zu 10 Gew.-Teilen weiterer Bestandteile, insgesamt 5 bis 150 Gew.-Teile eines oberflächenbehandelten, hochdispersen Füllstoffs (A) eingemischt werden.

3. Verfahren nach Anspruch 1 oder 2, **dadurch gekennzeichnet, dass** in eine Mischung aus 100 Gew.-Teilen Polyorganosiloxan (B) und 5 bis 150 Gew.-Teilen eines in einem separaten Verfahrensschritt oberflächenbehandelten, hochdispersen Füllstoffs (A), insgesamt 0.01 bis 30 Gew.-Teile einer siliziumorganischen Verbindung (C) eingemischt werden.

4. Verfahren gemäß einem der Ansprüche 1 bis 3, **dadurch gekennzeichnet, dass** der oberflächenbehandelte, hochdisperse Füllstoff (A) infolge der Oberflächenbehandlung einen Kohlenstoffgehalt von mindestens 0.01 bis maximal 20 Gew.-% auf, bevorzugt zwischen 0.1 und 10 Gew.-%, besonders bevorzugt zwischen 0.5 bis 5 Gew.-% aufweist.

5. Verfahren gemäß einem der Ansprüche 1 bis 4, **dadurch gekennzeichnet, dass** der Füllstoff (A) eine spezifische BET-Oberfläche von mindestens 50 m²/g, bevorzugt 100 bis 800 m²/g, besonders bevorzugt 150 bis 400 m²/g aufweist.

6. Verfahren gemäß einem der Ansprüche 1 bis 5, **dadurch gekennzeichnet, dass** der Füllstoff (A) eine pyrogene oder gefällte Kieselsäure, besonders bevorzugt eine pyrogene Kieselsäure ist.

7. Verfahren gemäß einem der Ansprüche 1 bis 6, **dadurch gekennzeichnet, dass** das Polyorganosiloxan (B) einen Polymerisationsgrad von 50 bis 10.000, bevorzugt zwischen 100 und 5.000, besonders bevorzugt zwischen 100 und 2.000 aufweist.

8. Verfahren gemäß einem der Ansprüche 1 bis 3, **dadurch gekennzeichnet, dass** die siliziumorganische Verbindung (C) ein lineares, verzweigtes oder cyclisches Oligosiloxan mit 2 bis 10 Siliziumatomen, bevorzugt Hexamethyldisiloxan, Octamethyltrisiloxan, 1,3-Divinyltetramethyldisiloxany, Octamethylcyclotetrasiloxan, Dekamethylcyclopentasiloxan, und 1,3,5,7-Tetravinyl-1,3,5,7-tetramethylcyclotetrasiloxan, besonders bevorzugt Hexamethyldisiloxan ist.

9. Verfahren gemäß einem der Ansprüche 1 bis 8, **dadurch gekennzeichnet, dass** der oberflächenbehandelte, hochdisperse Füllstoff (A) mit einem Hydrophobierungsmittel behandelt worden ist ausgewählt aus der Gruppe enthaltend Silane der allgemeinen durchschnittlichen Formeln (I) oder (II)
R¹₄₋ₓSiAₓ (I)
(R¹₃Si)_{y}B (II),
worin
R¹ gleiche oder verschiedene monovalente, gegebenenfalls halogensubstituierte Kohlenwasserstoffreste mit 1 bis 12 Kohlenstoffatomen,
A Halogen, -OH, -OR² oder -OCOR²,
B -NR³_{3-y},
R² gleiche oder verschiedene monovalente Kohlenwasserstoffreste mit 1 bis 12 Kohlenstoffatomen,
R³ Wasserstoffatom oder die gleiche Bedeutung wie R¹,
x 1, 2 oder 3, und
y 1 oder 2,
bedeuten, und Organopolysiloxane bestehend aus Einheiten der allgemeinen durchschnittlichen Formel (III)
R⁴_{z}SiO_{(4-z)/2} (III),
worin
R⁴ gleiche oder verschiedene monovalente, gegebenenfalls halogensubstituierte Kohlenwasserstoffreste mit 1 bis 12 Kohlenstoffatomen, Halogen-, Hydroxy-, -OR² oder -OCOR² Gruppen und
z 1, 2 oder 3
bedeuten.

10. Verfahren gemäß einem der Ansprüche 1 bis 9, **dadurch gekennzeichnet, dass** die Polyorganosiloxane (B) der allgemeinen durchschnittlichen Formel (IV)
R**⁵ₐ**R**⁶_{b}**SiO**_{(4-a-b)/2}** (IV),
worin
R**⁵** gleiche oder verschiedene monovalente, gegebenenfalls halogensubstituierte oder Heteroatome enthaltende Kohlenwasserstoffreste mit 1 bis 20 Kohlenstoffatomen, die frei von aliphatisch ungesättigten Gruppen sind,
R**⁶** gleiche oder verschiedene monovalente, aliphatisch ungesättigte, gegebenenfalls halogensubstituierte oder Heteroatome enthaltende Kohlenwasserstoffreste mit 1 bis 10 Kohlenstoffatomen, die einer Hydrosilylierungsreaktion zugänglich sind,
a eine positive Zahl zwischen 1 und 2,997 und
b eine positive Zahl zwischen 0.003 und 2
mit der Maßgabe bedeuten, dass 1,5 < (a+b) < 3,0 gilt und dass pro Molekül durchschnittlich mindestens zwei aliphatisch ungesättigte Reste enthalten sind,
genügen.

11. Verfahren gemäß einem der Ansprüche 1 bis 10, **dadurch gekennzeichnet, dass** zur Herstellung der oberflächenbehandelte, hochdisperse Füllstoffe enthaltenden Siliconmassen Mischwerkzeuge ausgewählt aus der Gruppe enthaltend Rührwerke, Sigmakneter, Stempelkneter, Knetmaschinen, Innenmischer, Einschneckenextruder, Doppelschneckenextruder, oszillierende Pilgerschrittkneter, Dissolver, Mischturbinen, Pressmischer und Mischwalzwerke verwendet werden.

## Claims

1. Process for the preparation of silicone materials containing surface-treated, finely divided fillers, **characterized in that**
(a) the mixing of a surface-treated, finely divided filler (A) with a polyorganosiloxane (B) is effected in the presence of a low molecular weight organosilicon compound (C) having 2 to 10 silicon atoms which contains no hydrolyzable or condensable functional groups, or
(b) a mixture consisting of a surface-treated, finely divided filler (A) and a polyorganosiloxane (B) is homogeneously mixed with a low molecular weight organosilicon compound (C) having 2 to 10 silicon atoms which contains no hydrolyzable or condensable functional groups,
and then the filler-containing silicone material is freed from at least 80%, based on the amount of the low molecular weight organosilicon compound (C) used, of the low molecular weight organosilicon compound (C), it being possible for the surface-treated, finely divided filler (A), the polyorganosiloxane (B) and the organosilicon compound (C) to be in each case a single substance or a mixture of substances.

2. Process according to Claim 1, **characterized in that** altogether 5 to 150 parts by weight of a surface-treated, finely divided filler (A) are mixed into a mixture of 100 parts by weight of polyorganosiloxane (B) and 0.01 to 30 parts by weight of organosilicon compound (C) and optionally up to 10 parts by weight of further constituents.

3. Process according to Claim 1 or 2, **characterized in that** altogether 0.01 to 30 parts by weight of an organosilicon compound (C) are mixed into a mixture of 100 parts by weight of polyorganosiloxane (B) and 5 to 150 parts by weight of a finely divided filler (A) surface-treated in a separate process step.

4. Process according to any of Claims 1 to 3, **characterized in that** the surface-treated, finely divided filler (A) has, as a result of the surface treatment, a carbon content of at least 0.01 to not more than 20% by weight, preferably between 0.1 and 10% by weight, particularly preferably between 0.5 and 5% by weight.

5. Process according to any of Claims 1 to 4, **characterized in that** the filler (A) has a specific BET surface area of at least 50 m²/g, preferably 100 to 800 m²/g, particularly preferably 150 to 400 m²/g.

6. Process according to any of Claims 1 to 5, **characterized in that** the filler (A) is a pyrogenic or precipitated silica, particularly preferably a pyrogenic silica.

7. Process according to any one of Claims 1 to 6, **characterized in that** the polyorganosiloxane (B) has a degree of polymerization of 50 to 10 000, preferably between 100 and 5000, particularly preferably between 100 and 2000.

8. Process according to any of Claims 1 to 3, **characterized in that** the organosilicon compound (C) is a linear, branched or cyclic oligosiloxane having 2 to 10 silicon atoms, preferably hexamethyldisiloxane, octamethyltrisiloxane, 1,3-divinyltetramethyldisiloxane, octamethylcyclotetrasiloxane, decamethylcyclopentasiloxane and 1,3,5,7-tetravinyl-1,3,5,7-tetramethylcyclotetrasiloxane, particularly preferably hexamethyldisiloxane.

9. Process according to any one of Claims 1 to 8, **characterized in that** the surface-treated, finely divided filler (A) has been treated with a water repellent selected from the group consisting of silanes of the general average formulae (I) or (II)
R¹₄₋ₓSiAₓ (I)
(R¹₃Si)_{y}B (II)
in which
R¹ denotes identical or different monovalent, optionally halogen-substituted hydrocarbon radicals having 1 to 12 carbon atoms,
A denotes halogen, -OH, -OR² or -OCOR²,
B denotes -NR³_{3-y},
R² denotes identical or different monovalent hydrocarbon radicals having 1 to 12 carbon atoms,
R³ denotes a hydrogen atom or has the same meaning as R¹,
x denotes 1, 2 or 3, and
y denotes 1 or 2,
and organopolysiloxanes consisting of units of the general average formula (III)
R⁴_{z}SiO_{(4-z)/2} (III)
in which
R⁴ denotes identical or different monovalent, optionally halogen-substituted hydrocarbon radicals having 1 to 12 carbon atoms or halogen, hydroxyl, -OR² or -OCOR² groups and
z denotes 1, 2 or 3.

10. Process according to any of Claims 1 to 9, **characterized in that** the polyorganosiloxanes (B) complies with the average general formula (IV)
R⁵ₐR⁶_{b}SiO_{(4-a-b)/2} (IV)
in which
R⁵ denotes identical or different monovalent, optionally halogen-substituted or heteroatom-containing hydrocarbon radicals having 1 to 20 carbon atoms, which are free of aliphatically unsaturated groups,
R⁶ denotes identical or different monovalent, aliphatically unsaturated, optionally halogen-substituted or heteroatom-containing hydrocarbon radicals having 1 to 10 carbon atoms, which are capable of undergoing a hydrosilylation reaction,
a denotes a positive number between 1 and 2.997 and
b denotes a positive number between 0.003 and 2,
with the proviso that 1.5 < (a+b) < 3.0 and that on average at least two aliphatically unsaturated radicals are present per molecule.

11. Process according to any of Claims 1 to 10, **characterized in that** mixing tools selected from the group consisting of stirrers, sigma kneaders, punch kneaders, kneading machines, internal mixers, single-screw extruders, twin-screw extruders, reciprocating kneaders, dissolvers, mixing turbines, press mixers and mixing rolls are used for the preparation of the silicone materials containing surface-treated, finely divided fillers.

## Revendications

1. Procédé de fabrication de masses siliconées contenant des charges hautement dispersées traitées en surface, **caractérisé en ce que :**
(a) le mélange d'une charge hautement dispersée traitée en surface (A) avec un polyorganosiloxane (B) s'effectue en présence d'un composé d'organosilicium (C) de faible poids moléculaire, ayant 2 à 10 atomes de silicium, qui ne contient pas de groupements fonctionnels hydrolysables ou condensables, ou
(b) l'on mélange de manière homogène un mélange constitué d'une charge hautement dispersée traitée en surface (A) et d'un polyorganosiloxane (B) à un composé d'organosilicium (C) de faible poids moléculaire, ayant 2 à 10 atomes de silicium, qui ne contient pas de groupements fonctionnels hydrolysables ou condensables,
et ensuite, la masse siliconée contenant une charge est débarrassée du composé d'organosilicium (C) de faible poids moléculaire au moins à 80 % par rapport à la quantité utilisée du composé d'organosilicium (C) de faible poids moléculaire, la charge hautement dispersée traitée en surface (A), le polyorganosiloxane (B) et le composé d'organosilicium (C) pouvant respectivement former une seule substance ou un mélange de substances.

2. Procédé selon la revendication 1, **caractérisé en ce que** l'on incorpore à un mélange de 100 parties en poids de polyorganosiloxane (B), de 0,01 à 30 parties en poids de composé d'organosilicium (C) et éventuellement de jusqu'à 10 parties en poids d'autres composants, au total 5 à 150 parties en poids d'une charge hautement dispersée traitée en surface (A).

3. Procédé selon la revendication 1 ou 2, **caractérisé en ce que** l'on incorpore à un mélange de 100 parties en poids de polyorganosiloxane (B) et de 5 à 150 parties en poids d'une charge hautement dispersée traitée en surface (A) dans une étape de procédé séparée, au total 0,01 à 30 parties en poids d'un composé d'organosilicium (C).

4. Procédé selon l'une quelconque des revendications 1 à 3, **caractérisé en ce que** la charge hautement dispersée traitée en surface (A) présente, après le traitement en surface, une teneur en carbone d'au moins 0,01 à 20 % en poids maximum, de préférence entre 0,1 et 10 % en poids, mieux encore entre 0,5 et 5 % en poids.

5. Procédé selon l'une quelconque des revendications 1 à 4, **caractérisé en ce que** la charge (A) présente une surface spécifique BET d'au moins 50 m²/g, de préférence de 100 à 800 m²/g, mieux encore de 150 à 400 m²/g.

6. Procédé selon l'une quelconque des revendications 1 à 5, **caractérisé en ce que** la charge (A) est un acide silicique pyrogéné ou précipité, mieux encore un acide silicique pyrogéné.

7. Procédé selon l'une quelconque des revendications 1 à 6, **caractérisé en ce que** le polyorganosiloxane (B) présente un degré de polymérisation de 50 à 10 000, de préférence entre 100 et 5000, mieux encore entre 100 et 2000.

8. Procédé selon l'une quelconque des revendications 1 à 3, **caractérisé en ce que** le composé d'organosilicium (C) est un oligosiloxane linéaire, ramifié ou cyclique, avec 2 à 10 atomes de silicium, de préférence l'hexaméthyldisiloxane, l'octaméthyltrisiloxane, le 1,3-divinyltétraméthyldisiloxane, l'octaméthylcyclotétra-siloxane, le décaméthylcyclopentasiloxane et le 1,3,5,7-tétravinyl-1,3,5,7-tétraméthylcyclotétrasiloxane, mieux encore l'hexaméthyldisiloxane.

9. Procédé selon l'une quelconque des revendications 1 à 8, **caractérisé en ce que** la charge hautement dispersée traitée en surface (A) a été traitée avec un agent d'hydrophobisation choisi dans le groupe contenant les silanes de formules ordinaires générales (I) ou (II) :
R¹₄₋ₓSiAₓ (I)
(R¹₃Si)_{y}B (II),
dans lesquelles :
R¹ représente des radicaux hydrocarbonés monovalents identiques ou différents, éventuellement à substitution halogène, ayant 1 à 12 atomes de carbone,
A représente un halogène, un radical -OH, -OR² ou -OCOR²,
B représente un radical -NR³_{3-y},
R² représente des radicaux hydrocarbonés monovalents identiques ou différents, ayant 1 à 12 atomes de carbone,
R³ représente un atome d'hydrogène ou a la même signification que R¹,
x vaut 1, 2 ou 3, et
y vaut 1 ou 2,
et les organopolysiloxanes constitués d'unités de formule ordinaire générale (III) :
R⁴_{z}SiO_{(4-z)/2} x (II),
dans laquelle :
R⁴ représente des radicaux hydrocarbonés monovalents identiques ou différents, éventuellement à substitution halogène, ayant 1 à 12 atomes de carbone, des groupements halogène, hydroxy, -OR² ou -OCOR² et
z vaut 1, 2 ou 3.

10. Procédé selon l'une quelconque des revendications 1 à 9, **caractérisé en ce que** les polyorganosiloxanes (B) répondent à la formule ordinaire générale (IV) :
R**⁵ₐ**R**⁶_{b}**SiO**_{(4-a-b)/2}** (IV),
dans laquelle :
R⁵ représente des radicaux hydrocarbonés monovalents identiques ou différents, éventuellement à substitution halogène, ou contenant des hétéroatomes, ayant 1 à 20 atomes de carbone, qui sont exempts de groupements à insaturation aliphatique,
R⁶ représente des radicaux hydrocarbonés monovalents identiques ou différents à insaturation aliphatique, éventuellement à substitution halogène ou contenant des hétéroatomes avec 1 à 10 atomes de carbone qui peuvent être soumis à une réaction d'hydrosilylation,
a est un nombre positif entre 1 et 2997 et
b est un nombre positif entre 0,003 et 2,
à condition que 1,5 < (a+b) < 3,0 et qu'en moyenne il y ait au moins deux radicaux à insaturation aliphatique par molécule.

11. Procédé selon l'une quelconque des revendications 1 à 10, **caractérisé en ce que,** pour fabriquer les masses siliconées contenant des charges hautement dispersées traitées en surface, on utilise des outils de mélange choisis dans le groupe contenant des agitateurs, des malaxeurs Sigma, des malaxeurs à piston, des machines de malaxage, des mélangeurs internes, des extrudeuses à une seule vis, des extrudeuses à vis jumelées, des malaxeurs oscillants à pas de pèlerin, des dissolveurs, des turbines de mélange, des mélangeurs à presse et des moulins mélangeurs.
